(19) Europäisches Patentamt

European Patent Office

Office européen des brevets

(11) **EP 3 991 136 B1**

(12) **FASCICULE DE BREVET EUROPEEN**

(45) Date de publication et mention
de la délivrance du brevet:
**23.04.2025 Bulletin 2025/17**

(21) Numéro de dépôt: **20734079.5**

(22) Date de dépôt: **26.06.2020**

(51) Classification Internationale des Brevets (IPC):
***G06T 7/20*** (2017.01)

(52) Classification Coopérative des Brevets (CPC):
**G06T 7/20;** G06T 2207/10028; G06T 2207/30196

(86) Numéro de dépôt international:
**PCT/EP2020/068102**

(87) Numéro de publication internationale:
**WO 2020/260635 (30.12.2020 Gazette 2020/53)**

(54) **PROCÉDÉ D'ANALYSE DE LA DÉMARCHE D'UN INDIVIDU**

VERFAHREN ZUR ANALYSE DES GANGS EINER PERSON

METHOD FOR ANALYSING THE GAIT OF AN INDIVIDUAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2019 FR 1906970**

(43) Date de publication de la demande:
**04.05.2022 Bulletin 2022/18**

(73) Titulaire: **Ekinnox
06560 Valbonne (FR)**

(72) Inventeurs:
• **GAUTIER, Mélaine
06600 ANTIBES (FR)**
• **FAVREAU, Jean-Dominique
06560 VALBONNE (FR)**
• **ALLIEZ, Pierre
06560 VALBONNE (FR)**
• **BUSE, Laurent
06140 VENCE (FR)**
• **FOSTY, Baptiste
06600 ANTIBES (FR)**

(74) Mandataire: **Hautier IP
20, rue de la Liberté
06000 Nice (FR)**

(56) Documents cités:
**US-A1- 2015 325 004**

• **AYANORI YOROZU ET AL: "Improved Leg
Tracking Considering Gait Phase and Spline-
Based Interpolation during Turning Motion in
Walk Tests", SENSORS, vol. 15, no. 9, 4
September 2015 (2015-09-04), pages 22451 -
22472, XP055664708, DOI: 10.3390/s150922451**

**Description**

**DOMAINE TECHNIQUE**

L'invention concerne le domaine des procédés d'analyse de la démarche d'un individu. Elle concerne plus particulièrement un procédé dit sans marqueur et ne mettant en œuvre aucun capteur porté par l'individu. L'invention trouve pour application particulièrement avantageuse la quantification de paramètres caractérisant la démarche d'un individu.

**ÉTAT DE LA TECHNIQUE**

Il existe plusieurs types de procédés d'analyse sans marqueur. Ils peuvent être classés en deux sous-catégories: les procédés holistiques (généralement sans modèle) et ceux basés sur un modèle.

Pour les procédés holistiques, les individus sont généralement d'abord détectés, suivis et segmentés; ensuite, la démarche est généralement caractérisée à l'aide de statistiques issues de schémas spatio-temporels générés par la silhouette de l'individu qui marche. Un ensemble de caractéristiques / signatures de la marche est ensuite calculé à partir de schémas de segmentation / reconnaissance, etc. Une approche correspondante consiste à analyser les signaux d'autocorrélation d'une séquence d'images.

Les procédés basés sur des modèles utilisent des modèles de corps / forme ou de mouvement pour récupérer les caractéristiques de la mécanique de la démarche et de la cinématique. La relation entre les parties du corps servira à segmenter chaque foulée / étape ou à d'autres fins.

Pour la plupart des procédés d'analyse de la démarche, la segmentation précise du cycle de marche constitue l'une des étapes et des blocs de construction les plus importants. Mesurer la foulée de la marche est essentiel, notamment pour le diagnostic et le suivi de certaines maladies, telles que la maladie de Parkinson, qui progressent généralement sur une longue période. Dans ce contexte, il est très souhaitable de permettre des évaluations fréquentes et objectives pour comprendre en permanence l'état ambulatoire des patients. Les signaux dont l'analyse permet de mesurer la démarche peuvent provenir de données de caméra. Les procédés actuels d'analyse de la marche incluent la segmentation manuelle ou automatique basée sur certains signaux relatifs à la marche pour en déduire la distance entre les pieds ou les angles du genou, etc. L'analyse quantifiée de la marche à partir d'enregistrements vidéo nécessite la présence d'un professionnel qualifié dont l'expertise est couteuse, limitant par-là la fréquence à laquelle les évaluations peuvent être effectuées.

La présente invention concerne plus particulièrement ce dernier type de procédé d'analyse, sans marqueur et basé sur un modèle.

Il est connu, du document US2017/0243354 A1, un tel procédé d'analyse de la démarche d'un individu comprenant l'obtention de données visuelles à partir d'un dispositif de capture d'images positionné devant ou derrière l'individu. Les données visuelles comprennent des prises de vue de l'individu sur une période de temps durant laquelle l'individu se rapproche ou s'éloigne d'un dispositif de capture d'images, les prises de vue capturant ainsi au moins une partie de la démarche de l'individu. Le procédé consiste :

a. à détecter, dans les prises de vue, au moins deux parties du corps de l'individu, en tant que points de repère bidimensionnels, en utilisant un algorithme d'estimation de la pose sur chacune des prises de vue,
b. à générer un modèle d'articulation décrivant l'emplacement d'au moins une articulation dans chacune des prises de vue,
c. à utiliser le modèle d'articulation pour segmenter un cycle de marche pour l'au moins une articulation, puis
d. à comparer le cycle de marche à une valeur seuil pour détecter une démarche anormale.

Une représentation du corps et de la démarche est ainsi générée qui peut fournir les caractéristiques de la démarche de tout individu.

Il est connu du document US 2015/325004 A1 une méthode pour évaluer l'occurrence d'une maladie chez un patient à partir d'une analyse de sa démarche, réalisée sur une séquence acquise d'images de profondeur.

Il est connu de la publication "Improved Leg Tracking Considering Gait Phase and Spline-Based Interpolation during Turning Motion in Walk Tests", de AYANORI YOROZU ET. AL. :SENSORS, vol. 15, no. 9, 4 septembre 2015 (2015-09-04), pages 22451-22472, une méthode de tracking des jambes d'un sujet à l'aide d'un capteur laser de profondeur, afin d'évaluer les fonctions motrices du sujet pendant sa démarche.

Un objet de la présente invention est de proposer un procédé d'analyse alternatif, présentant de préférence au moins les mêmes avantages.

Un objet de la présente invention est plus particulièrement de proposer un procédé d'analyse simple à mettre en oeuvre et peu coûteux au moins en ce qu'il ne nécessite pas la présence d'un professionnel qualifié. Plus spécifiquement, le procédé vise de préférence à permettre l'analyse et la quantification de la démarche d'un individu circulant dans un espace restreint et/ou par un praticien peu expérimenté, voire peu qualifié.

Les autres objets, caractéristiques et avantages de la présente invention apparaîtront à l'examen de la description suivante et des dessins d'accompagnement. Il est entendu que d'autres avantages peuvent être incorporés.

## RÉSUMÉ

Selon un premier aspect, l'invention concerne un procédé d'analyse de la démarche d'un individu selon la revendication 1.

De manière facultative, l'invention selon son premier aspect introduit ci-dessus peut en outre présenter au moins l'une quelconque des caractéristiques optionnelles ci-après qui peuvent éventuellement être utilisées en association ou alternativement.

Selon une première de ces caractéristiques optionnelles, pour chaque pied, la représentation d'une phase d'appui, la représentation d'une phase d'accélération succédant immédiatement à la phase d'appui et la représentation d'une phase de décélération succédant immédiatement à la phase d'accélération forment ensemble une représentation, de préférence continue, d'une enjambée. Pour chaque pied, une succession de représentations d'une enjambée peut former une représentation, de préférence continue, d'une partie de la démarche relative au pied considéré.

Selon une autre caractéristique optionnelle, ledit au moins un paramètre de la démarche de l'individu comprend au moins l'un parmi :

a. la longueur d'au moins une, voire de chaque, enjambée calculée comme une différence d'ordonnées entre les représentations des phases d'appui successives d'un même pied,

b. la longueur d'au moins un, voire de chaque, demi-pas calculée comme une différence d'ordonnées entre la représentation de la phase d'appui d'un pied et la représentation de la phase d'appui de l'autre pied, les représentations de phase d'appui se succédant directement entre elles,

c. la cadence des enjambées calculée comme le nombre moyen de croisements entre les deux représentations par unité de temps,

d. la vitesse de l'individu calculée par exemple comme une différence d'ordonnées entre deux croisements des représentations divisée par la différence d'abscisses entre ces deux croisements,

e. au moins un temps d'appui simple calculé comme une différence d'abscisses entre le début d'une représentation de la phase d'accélération d'un pied et la fin d'une représentation de la phase de décélération de ce pied, la représentation de la phase de décélération succédant directement à la représentation de la phase d'accélération, et

f. au moins un temps d'appui double calculé comme une différence d'abscisses entre la fin d'une représentation de phase de décélération d'un pied et le début d'une représentation de phase d'accélération de l'autre pied, la représentation de la phase d'accélération succédant directement à la représentation de la phase de décélération.

Selon une autre caractéristique optionnelle, l'étape de construction de chaque représentation graphique comprend, pour au moins une séquence d'images du flux, une étape de traitement par un filtre de lissage, par exemple un filtre médian, des images de la séquence pour obtenir au moins la représentation graphique de la trajectoire du pied. Chaque séquence peut plus particulièrement être déterminée comme représentative d'une marche dans un sens ou dans un sens opposé (par exemple frontale ou dorsale).

Selon une autre caractéristique optionnelle, le procédé comprend en outre, pour au moins une séquence d'images du flux, une étape de reséquençage de la séquence de sorte à en conserver une partie exploitable aux fins du calcul dudit au moins un paramètre de la démarche de l'individu. Là encore, chaque séquence peut plus particulièrement être déterminée comme représentative d'une marche dans un sens ou dans un sens opposé (par exemple frontale ou dorsale). L'étape de reséquençage peut plus particulièrement comprendre l'implémentation d'un algorithme de croissance de régions basé sur, ou équivalemment initialisé avec, l'aire des zones graphiques :

- délimitées chacune par les représentations graphiques bidimensionnelles des trajectoires des pieds et
- comprises chacune entre deux croisements adjacents desdites représentations graphiques. Dans le procédé selon cette dernière caractéristique, l'implémentation de l'algorithme de croissance de régions peut comprendre :

a. la mesure de l'aire de chacune desdites zones,
b. la détermination, puis la sélection, de la zone de plus grande aire,
c. la sélection de toute zone :

i. connexe à une zone précédemment sélectionnée, et
ii. d'aire supérieure à une valeur seuil prédéterminée exprimée par exemple en mm.ms, de préférence la valeur seuil étant égale à 4 mm.ms,

3

la partie exploitable de ladite au moins une séquence d'images du flux étant définie comme la succession d'images du flux représentative de toutes les zones sélectionnées. L'étape de sélection d'une zone peut dépendre en outre d'un critère selon lequel l'aire de la zone est supérieure au produit de la plus grande aire par un coefficient multiplicatif inférieur à 0,1, par exemple égal à 0,0015.

Selon une autre caractéristique optionnelle, le procédé comprend en outre, avant l'étape de modélisation spatio-temporelle, une étape de traitement de chaque carte de profondeur et/ou de chaque image, de préférence en couleurs, pour en extraire un ensemble de pixels correspondant à la représentation de l'individu distingué parmi les objets vus par le dispositif.

Le procédé selon cette dernière caractéristique peut en outre comprendre la détermination des positions d'au moins deux articulations de l'individu sur la base de chaque ensemble de pixels extrait.

En alternative ou en complément à la caractéristique ci-dessus, le procédé peut en outre comprendre une étape de segmentation de la succession d'images du flux sur la base des ensembles de pixels extraits, l'étape de segmentation comprenant :

a. La détermination de la position du centre de gravité de chaque ensemble de pixels dans l'espace euclidien, puis
b. Sur la base des positions du centre de gravité précédemment déterminées, la détermination de la trajectoire du centre de gravité comme une succession de segments $d_k$ juxtaposés deux à deux, puis
c. Sur la base de la trajectoire du centre de gravité précédemment déterminée, la détermination d'au moins une séquence d'images du flux comme étant représentative d'une marche dans un sens ou dans un sens opposé de l'individu relativement au dispositif de capture d'images.

Le procédé comprenant l'étape de segmentation telle qu'introduite ci-dessus peut le cas échéant, dans l'exécution de cette étape, prendre en compte les positions desdites au moins deux articulations telles que précédemment déterminées.

La détermination de la trajectoire du centre de gravité telle qu'introduite ci-dessus peut plus particulièrement comprendre l'utilisation de l'algorithme de Douglas-Peucker avec une valeur seuil de distance minimale de division déterminée empiriquement pour déterminer les segments $d_k$.

En alternative ou en complément à la caractéristique précédente, la détermination de ladite au moins une séquence d'images du flux comprend :

a. l'association, à chaque segment $d_k$, d'un label $l_k$ choisi parmi un ensemble de labels représentant chacun une action associée à un modèle paramétrique décrivant l'action dans l'espace et dans le temps,
b. la mesure d'un niveau de pertinence de l'association précédemment réalisée en comparant, pour chaque segment $d_k$, au moins un segment voisin tel que prédit par le modèle paramétrique au segment voisin correspondant parmi ceux précédemment déterminés,
c. en cas d'un niveau de pertinence inférieur à une valeur seuil prédéterminée, modifier l'association précédente en appliquant un critère de modification pénalisant l'association de deux labels différents à deux segments successifs, puis
d. lorsque les niveaux de pertinence mesurés sont supérieurs à la valeur seuil prédéterminée, identifier un ensemble connexe de segments associés à un même label,

chaque séquence d'images du flux étant déterminée comme correspondant à un ensemble connexe identifié.

L'invention selon son premier aspect concerne également un produit programme d'ordinateur ou sur un média non-transitoire lisible par un ordinateur comprenant des instructions, qui lorsqu'elles sont effectuées par au moins un processeur, exécute au moins les étapes du procédé d'analyse tel qu'introduit ci-dessus.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

la figure 1 illustre schématiquement l'étape d'acquisition d'un flux d'images de l'individu en mouvement de marche par un dispositif de capture d'images selon un mode de réalisation de l'invention ;
la figure 2 illustre schématiquement différentes étapes de traitement des images captées par le dispositif de capture d'images selon un mode de réalisation de l'invention ;
la figure 3 illustre schématiquement une segmentation en séquences d'un flux d'images de l'individu en mouvement selon un mode de réalisation de l'invention ;

la figure 4 illustre schématiquement une détermination de la trajectoire d'un pied sur au moins une séquence d'un flux d'images de l'individu en mouvement selon un mode de réalisation de l'invention ;

la figure 5 illustre schématiquement une étape de segmentation de la succession d'images du flux en séquences représentatives d'une marche de l'individu dans un sens puis dans un sens opposé respectivement par rapport au dispositif de capture d'images ;

la figure 6 illustre schématiquement un exemple d'implémentation de l'algorithme de Douglas-Peucker selon un mode de réalisation du procédé selon l'invention ;

la figure 7 illustre les représentations graphiques construites pour les pieds droit et gauche avec un signal de mesure bruité selon un mode de réalisation de l'invention ;

la figure 8 illustre graphiquement un modèle paramétrique du mouvement d'un pied dans l'axe de la marche selon un mode de réalisation de l'invention ;

la figure 9 illustre les représentations graphiques de la figure 7 avec un signal de mesure débruité selon un mode de réalisation de l'invention ;

la figure 10 illustre la façon de mesurer au moins un paramètre spatio-temporel de la démarche de l'individu sur la base des représentations graphiques des trajectoires des pieds selon un mode de réalisation de l'invention ; et

la figure 11 illustre les représentations graphiques d'une démarche pathologique avec un signal de mesure débruité selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

Le procédé selon le premier aspect peut plus particulièrement être tel que la détermination de ladite au moins une séquence d'images du flux comprend :

a. Associer aléatoirement, à chaque segment noté $d_k$, un label $l_k$ choisi parmi au moins trois labels («GO», «BACK» et «STATIC»), dont un premier label nommé «STATIC» est destiné à labéliser un segment sensiblement horizontal et chacun des deux autres labels nommés respectivement «GO» et «BACK» est destiné à labéliser un segment oblique par rapport à l'horizontale, l'association du label $l_k$ avec le segment $d_k$ étant notée $X_k$, de sorte que l'ensemble $X = (X_1, \dots, X_n)$, où n est le nombre de segments représentant la séquence d'images considérée, définit une configuration initiale, puis

b. Calculer la quantité $U(X)$ définie par :

$$U(X) = (1 - \lambda) \sum_{k=1}^{n} U_{fidelity}(X_k) + \lambda \sum_{k=2}^{n-1} U_{simplicity}(X_k)$$

Où le terme $U_{fidelity}$ favorise l'affectation du label «STATIC» aux segments de pente inférieure, en valeur absolue, à une valeur seuil déterminée, l'affectation du label «BACK» aux segments de pente positive dont la valeur est supérieure à ladite valeur seuil déterminée et l'affectation du label «GO» aux segments de pente négative dont la valeur est, en valeur absolue, supérieure à ladite valeur seuil déterminée, et

Où le terme $U_{fidelity}$ pénalise l'affectation de deux labels différents à des segments adjacents entre eux,

Avec :

$$U_{fidelity}(X_k) = \begin{cases} \dfrac{1}{8} w(1 + y_k)^2 \text{ si } l_k = GO \\ \dfrac{1}{8} w(1 - y_k)^2 \text{ si } l_k = BACK \\ 8 w y_k^2 \text{ autrement} \end{cases}$$

Et :

$$U_{\text{simplicity}}(X_k) = \frac{1}{4}\Big(2 - 1_{l_k}(l_k - 1) - 1_{l_k}(l_k + 1)\Big)$$

Où $y_k$ est proportionnel à la pente du segment $d_k$ et w est égal au nombre de positions déterminées du centre de gravité qui composent le segment $d_k$ divisé par le nombre total de segments,

> a. Modifier le label associé à au moins un segment de sorte à obtenir une nouvelle configuration et calculer la quantité U(X) correspondante :

>> 1. Si la quantité U(X) décroit, réitérer l'étape iii à partir de la nouvelle configuration,
>> 2. Sinon, réitérer l'étape iii à partir de la configuration précédente,

> b. Après un nombre déterminé d'itérations de l'étape iii :

>> 1. Identifier un ensemble connexe de segments labélisés «GO» comme déterminant une séquence d'images du flux représentative d'une marche dans un sens de l'individu et
>> 2. Identifier un ensemble connexe de segments labélisés «BACK» comme déterminant une séquence d'images du flux représentative d'une marche dans un sens opposé de l'individu.

## DESCRIPTION DÉTAILLÉE

On entend par «un dispositif de capture d'images» notamment un dispositif de capture d'images monoculaire, ce dernier étant par exemple défini comme un dispositif de capture d'images comprenant une pluralité de capteurs localisés en un même point de vue. Autrement dit, le dispositif de capture d'images dont l'usage est prévu dans le cadre de la présente invention peut avantageusement être un dispositif à point de vue unique sur la scène filmée. Ceci est particulièrement avantageux en termes de coût et de simplicité de mise en œuvre. En alternative plus coûteuse et plus complexe, le dispositif de capture d'images peut comprendre une pluralité de capteurs distribués en plusieurs endroits autour de l'individu, un tel dispositif étant généralement appelé dispositif de stéréovision. D'autres alternatives existent encore, qui peuvent également être mises en œuvre selon la présente invention, et parmi lesquelles on peut citer : une caméra fonctionnant sur le principe du temps de vol (ou en anglais «Time of Flight», TOF) permettant de mesurer en temps réel une scène en 3 dimensions (3D) et une caméra utilisée en distorsion de motifs (ou en anglais «pattern distortion») permettant également de reconstruire des images tridimensionnelles.

On entend par «pied» soit un pied de l'individu, qu'il soit sain ou malade, soit un dispositif prothésiste de ceux destinés à remplacer tout ou partie d'un pied, voire d'une jambe, de l'individu. En outre, l'individu peut être équipé d'un accessoire d'aide à la marche, telle qu'une béquille ou d'une paire de béquilles manipulée par l'individu lors de la prise de vue. Dans le cas d'un individu unijambiste aidé dans sa démarche, ou plus généralement dans son mouvement, par une béquille, la béquille peut être considérée comme un pied de l'individu et chaque phase du mouvement de l'extrémité de la béquille peut alors être analysée comme une phase correspondante du mouvement d'un pied.

On entend par «filtre de lissage» un filtre analogique ou numérique configuré pour enlever les artéfacts et aberrations dans un ensemble de données, notamment en fonction d'un voisinage de chaque donnée de cet ensemble. Il peut s'agir par exemple de filtres connus, notamment dans le domaine du traitement d'images, tels qu'un filtre médian, un filtre pondéré, un filtre moyen.

On entend par «bruit» l'altération, externe ou intrinsèque, s'ajoutant à un signal de données ou de mesure, sans lui être corrélé.

On entend par «occultation» l'action consistant à masquer une partie du corps par une autre ou par un objet, tel qu'un élément du décor dans lequel évolue un individu. Par exemple, un pied peut être caché par l'autre lors d'une démarche de type mannequin.

On entend par « séquence » une partie d'une vidéo découpée de sorte à correspondre à une partie dite identifiante de l'une des actions de l'individu telles qu'une marche aller, une marche retour, un demi-tour, etc.

On entend par « centre de gravité » d'un ensemble de pixels, un barycentre de cet ensemble de pixels dont les coordonnées dans un espace euclidien, de préférence à base orthonormale, correspondent à des moyennes arithmétiques des coordonnées homologues des pixels de l'ensemble, lesdites moyennes arithmétiques pouvant le cas échéant être affectées de coefficients de pondération.

Un mode de réalisation préféré du procédé d'analyse selon l'invention est décrit ci-après en référence aux figures annexées.

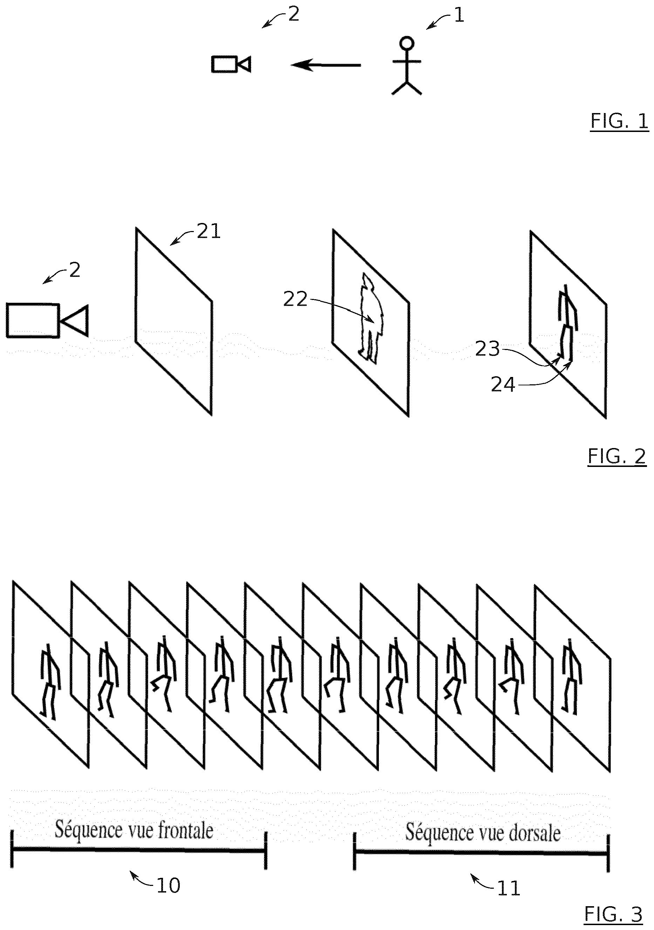

En référence à la figure 1, le procédé d'analyse selon l'invention met en œuvre un système d'acquisition et de traitement d'un flux d'images. Ce système peut plus particulièrement comprendre un dispositif de capture d'images 2 et des moyens de traitement des images captées. Lesdits moyens de traitement peuvent comprendre au moins un processeur et/ou un support de mémorisation lisible par un ordinateur propre à exécuter au moins les étapes du procédé d'analyse selon ses différents modes de réalisation, en particulier lorsque ces étapes prennent la forme d'instructions exécutables comprises dans un produit programme d'ordinateur.

Le système comprend par exemple une caméra RGB-D, telle que la caméra commercialisée sous l'appellation «Kinect» par Microsoft, propre à capturer un flux d'images comprenant au moins une succession d'images et une succession correspondante de cartes de profondeur, et à analyser le flux d'images captées pour reconstruire des images dites tridimensionnelles. Les moyens de traitement du système sont quant à eux configurés au moins pour d'une part extraire un modèle spatio-temporel de la démarche d'un utilisateur, d'autre part extraire les paramètres standards de la démarche, comme la longueur des pas, la cadence, les temps de simple et double appui. Dans l'absolu, les moyens de traitement du système pourraient être intégrés directement dans le dispositif de capture d'images ou en alternative être distants du dispositif de capture d'images de sorte que la capture et le traitement des images puissent être décorrélés en temps et/ou en espace. Dans un mode de réalisation préférentiel du système, le dispositif de capture d'images et les moyens de traitement des images captées sont disposés sur un même chariot mobile propre à être déplacé en différents endroits d'une habitation, et plus particulièrement d'un local médical tel qu'un hôpital ou une clinique. Un même praticien, y compris non-expert, tel qu'un infirmier ou un aide-soignant, pourra ainsi, grâce au système et au procédé selon l'invention, réaliser l'analyse de la démarche d'un utilisateur quasiment en temps réel, par exemple en captant la démarche de l'individu déambulant dans un couloir et en recevant du système les paramètres qualifiant qualitativement et quantitativement la démarche captée. Notamment à cette fin, le système peut en outre comprendre toutes sortes d'interfaces homme-machine, telle qu'une souris, un clavier, une imprimante, etc.

Le procédé d'analyse de la démarche d'un individu selon l'invention met donc en œuvre le système décrit ci-dessus.

En référence à la figure 1, une première étape du procédé d'analyse selon l'invention consiste donc à acquérir, grâce au dispositif de capture d'images 2, un flux d'images de l'individu 1 en mouvement de marche.

La marche de l'individu n'est pas limitée ici à un mouvement dans un sens ou dans un autre relativement à la caméra. C'est en effet un avantage de la présente invention de pouvoir segmenter une succession d'images capturant, à la suite les uns des autres, des mouvements de marche divers et variés relativement à la position de la caméra.

Le procédé prévoit en effet avantageusement la possibilité d'extraire, au cours d'une étape dite de segmentation de la succession d'images du flux, des séquences chacune relative à un mouvement spécifique, en particulier spécifique relativement à la position de la caméra. C'est ainsi que peut être reconnu un mouvement de marche vers la caméra, définissant une séquence de type marche frontale, d'un mouvement de marche dans une direction opposée à la caméra, définissant une séquence de type marche dorsale. Plus largement, la segmentation en séquences de succession d'images selon l'invention peut être configurée de sorte à distinguer également la levée de l'individu depuis un siège, l'assise de l'individu sur un siège, un demi-tour, une marche rapide d'une marche lente, etc.

Considérons pour décrire l'étape de segmentation du procédé selon son mode de réalisation préféré, un mouvement de marche de l'individu combinant de façon juxtaposée un mouvement de marche vers la caméra est un mouvement de marche dans une direction opposée, de retour à la position de départ de l'individu. Ces mouvements successifs peuvent être répétés un certain nombre de fois, de sorte qu'une démarche d'un utilisateur dans un couloir de 5 m de long par exemple puisse être capturée et analysée sur un multiple de la longueur du couloir, et plus particulièrement sur 10 m dans le cas d'un aller-retour, sur 20 m dans le cas de deux allers-retours, etc.

En référence à la figure 2, le procédé selon son mode de réalisation préféré peut comprendre une étape de traitement de chaque carte de profondeur 21 et/ou de chaque image, de préférence en couleurs, pour en extraire un ensemble de pixels 22, appelé généralement masque, correspondant à la représentation de l'individu distingué parmi les objets vus par la caméra. Ce traitement peut par exemple être réalisé en effectuant une différence entre images et des opérations morphologiques standards. Notamment, il est envisagé de traiter, avant extraction des masques, les images à l'aide d'un filtre de lissage. Il est possible de déduire, notamment grâce à ce traitement, plusieurs données graphiques telles que le contour de l'individu, une estimation de la position de certaines parties ou articulations au moins de l'individu, de son squelette et notamment une estimation de la position de son pied droit 23 et de la position de son pied gauche 24, ou encore la position d'un centre de gravité, ou de façon équivalente d'un barycentre, de l'ensemble des pixels extrait.

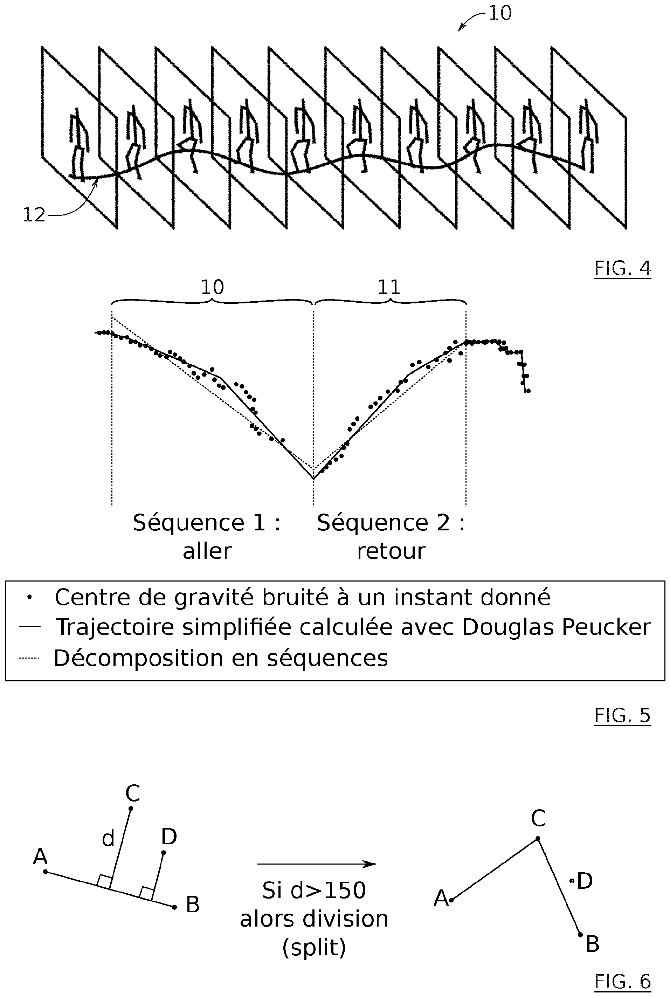

En particulier, une fois la position du centre de gravité de chaque ensemble de pixels déterminée, il est possible de déterminer la trajectoire du centre de gravité en représentant dans le même espace euclidien les positions successives du centre de gravité sur l'intégralité de la prise de vue. Notons ici qu'il est possible de déterminer, de la même manière, la trajectoire 12 du pied droit, telle que cela est représenté sur la figure 4, la trajectoire du pied gauche de l'individu, et celle de tout autre partie ou articulation de l'individu sur l'intégralité de la prise de vue. Pour ce qui est de la segmentation de la succession d'images captées, seule la trajectoire du centre de gravité est requise par le procédé d'analyse selon son mode de relation préféré. La détermination de la trajectoire du pied gauche et de la trajectoire du pied droit de l'individu sera utilisée ultérieurement à l'étape de segmentation.

En supposant que la prise de vue ait capté un mouvement d'approche de l'individu vers la caméra, puis un mouvement d'éloignement de l'individu depuis la caméra, la représentation graphique de la trajectoire du centre de gravité peut prendre la forme illustrée sur la figure 5 par la succession des points représentés. Il est immédiatement observable que les deux séquences sont distinguées entre elles. Toutefois, la trajectoire du centre de gravité peut être bruitée, et sa résolution peut être augmentée. C'est à cette fin que le procédé selon son mode de relation préféré prévoit en outre les étapes suivantes consistant à analyser de façon automatique et assistée par ordinateur la trajectoire du centre de gravité telle que déterminée jusqu'à présent.

La trajectoire du centre de gravité bruitée telle que représentée par des points sur la figure 5 peut être modélisée comme une succession de segments joignant chacun deux positions successives du centre de gravité. Il est possible de réaliser sur ce type d'ensemble de points une simplification de la trajectoire du centre de gravité de sorte à obtenir une trajectoire moins bruitée, voire débruitée. Cette simplification consiste à appliquer un filtre pour lisser les bruits (petites variations non désirées) et réduire les faux-positifs (découpages non souhaités), pour générer une nouvelle modélisation de la trajectoire du centre de gravité, et par voie de la trajectoire générale de l'individu.

Pour ce faire, il est prévu, par le procédé selon son mode de réalisation préféré, d'utiliser l'algorithme de Douglas-Peucker. Plus particulièrement cet algorithme suppose de déterminer une valeur seuil de distance minimale de division. Cette valeur seuil est plus particulièrement déterminée de façon empirique. Par exemple, si la personne se déplace vers la caméra à une vitesse (du centre de gravité) quasi constante pendant environ 80 images, puis s'éloigne de la caméra à une vitesse quasi constante pendant environ 80 images, cette situation étant celle représentée graphiquement sur la figure 5, la valeur seuil d peut être empiriquement déterminée comme étant égale à 150, ce qui mènera, comme illustré sur la figure 6, à une simplification des segments AC, CD et DB aux segments AC et CB. Plus particulièrement, la distance du segment AB au point C et la distance du segment AB au point D sont calculées pour déterminer, en fonction de la valeur seuil de distance minimale de division :

    i. si un des points C et D peut être écarté par simplification (ici le point D est écarté) et pour remodéliser alors la trajectoire (ici aux segments AC et CB), ou
    ii. si l'algorithme ne peut conduire à une telle simplification.

La détermination empirique de la valeur seuil de distance minimale de division est fonction d'un compromis entre les contraintes suivantes :

    i. si la valeur seuil est trop grande, il n'y aura pas de découpage, ou équivalent de simplification, de la trajectoire, et
    ii. si la valeur seuil est trop petite, la trajectoire pourra ne pas être correctement identifiée à cause du bruit.

La détermination de la trajectoire du centre de gravité non bruitée sur la succession d'images du flux peut comprendre, avant l'utilisation de l'algorithme de Douglas-Peucker, une initialisation de la trajectoire du centre de gravité à un nombre déterminé de segments pris entre des positions successives, mais pas toujours adjacentes entre elles, du centre de gravité. Ce nombre est défini empiriquement de sorte à permettre d'optimiser les ressources d'exécution du processeur mettant en œuvre le procédé selon l'invention, notamment en permettant un traitement en parallèle des données. Notamment, lorsque les données sont codées sur un octet, soit sur 8 bits, ce nombre est de préférence supérieur à 128, soit supérieur à $2^8/2$ (où l'on retrouve le nombre de bits (8) codant un octet de données) ; dans l'exemple illustré sur les figures, le nombre de segments initialement considérés est en outre choisi comme étant au plus égal à 253 segments.

L'utilisation de l'algorithme de Douglas-Peucker permet donc une simplification du maillage de la trajectoire du centre de gravité telle que déterminée par l'analyse des masques issus des images de la succession d'images captées et conduit à un débruitage de cette trajectoire. Elle permet en outre une optimisation de la mémoire CPU, en autorisant une parallélisation des calculs, répondant ainsi de façon optimisée à des contraintes de performance temporelle pour l'obtention des résultats du procédé d'analyse selon l'invention.

Dans le même but et en atteignant les mêmes avantages, d'autres types de méthodes de simplification auraient pu être utilisées en lieu et place de l'algorithme de Douglas-Peucker. Citons par exemple les méthodes dites «Edge collapse» selon la terminologie anglo-saxonne.

Le résultat de la simplification obtenue est représenté par des segments en traits continus représentés sur la figure 5. On y observe plus particulièrement quatre segments dont les deux premiers sont orientés vers le bas et les deux derniers sont orientés vers le haut. Chacune de ces paires de segments permet d'identifier une séquence correspondant à un mouvement de l'individu en rapprochement ou en éloignement relativement à la caméra. En outre, les segments de la première paire illustrée n'ayant pas la même représentation graphique (ici la même pente), cette simplification permet, dans l'exemple illustré, de mettre en exergue (en comparant les pentes des segments de chaque paire entre eux) que l'individu s'est d'abord rapproché de la caméra à une première vitesse avant d'accélérer dans un second temps de la séquence d'approche 10. De même, pour la séquence d'éloignement 11, il est mis en exergue que l'individu s'est d'abord éloigné de la caméra à une certaine vitesse, avant de s'en éloigner à une vitesse plus faible dans un second temps de la séquence d'éloignement.

Les courbes en tirets illustrées sur la figure 5 sont des ajustements des segments successifs ayant une pente de même signe. Elles décomposent la démarche de l'individu en séquences (ici au nombre de deux) d'images successives parmi la succession d'images captée.

Cette décomposition en séquences de l'intégralité de la prise de vue peut également être automatisée et implémentée par les moyens de traitement du système mettant en œuvre le procédé d'analyse selon l'invention. Plus particulièrement, le procédé d'analyse selon le mode de réalisation préféré de l'invention comprend la détermination automatisée d'au moins une séquence, de préférence de chaque séquence, d'images du flux, cette détermination automatisée comprenant les étapes suivantes :

i. l'association, à chaque segment $d_k$ (c'est-à-dire chaque segment défini entre deux positions successives du centre de gravité, en alternative et de préférence, chaque segment défini suite à l'utilisation de l'algorithme de Douglas-Peucker), d'un label $l_k$ choisi parmi un ensemble de labels représentant chacun une action associée à un modèle paramétrique décrivant l'action dans l'espace et dans le temps,
ii. la mesure d'un niveau de pertinence de l'association précédemment réalisée en comparant, pour chaque segment $d_k$, au moins un segment voisin tel que prédit par un modèle paramétrique au segment voisin correspondant parmi ceux précédemment déterminés,
iii. en cas d'un niveau de pertinence inférieur à une valeur seuil prédéterminée, modifier l'association précédente en appliquant un critère de modification pénalisant l'association de deux labels différents à deux segments successifs, puis
iv. lorsque les niveaux de pertinence mesurés sont supérieurs à la valeur seuil prédéterminée, identifier un ensemble connexe de segments associés à un même label,

chaque séquence d'images 10, 11 du flux étant déterminée comme correspondant à un ensemble connexe identifié.

Plus particulièrement, la détermination des séquences d'images du flux peut comprendre :

a. Associer aléatoirement, à chaque segment noté $d_k$, un label $l_k$ choisi parmi au moins trois labels («GO», «BACK» et «STATIC»), dont un premier label nommé «STATIC» est destiné à labéliser un segment sensiblement horizontal et chacun des deux autres labels nommés respectivement «GO» et «BACK» est destiné à labéliser un segment oblique par rapport à l'horizontale, l'association du label $l_k$ avec le segment $d_k$ étant notée $X_k$, de sorte que l'ensemble $X = (X_1, , X_n)$,où n est le nombre de segments représentant la séquence d'images considérée, définit une configuration initiale, puis
b. Calculer la quantité U(X) définie par :

$$U(X) = (1-\lambda)\sum_{k=1}^{n} U_{\text{fidelity}}(X_k) + \lambda \sum_{k=2}^{n-1} U_{\text{simplicity}}(X_k)$$

Où le terme $U_{\text{fidelity}}$ favorise l'affectation du label «STATIC» aux segments de pente inférieure, en valeur absolue, à une valeur seuil déterminée, l'affectation du label «BACK» aux segments de pente positive dont la valeur est supérieure à ladite valeur seuil déterminée et l'affectation du label «GO» aux segments de pente négative dont la valeur est, en valeur absolue, supérieure à ladite valeur seuil déterminée, et
Où le terme $U_{\text{simplicity}}$ pénalise l'affectation de deux labels différents à des segments adjacents entre eux,
Avec :

$$U_{\text{fidelity}}(X_k) = \begin{cases} \dfrac{1}{8}w(1+y_k)^2 \text{ si } l_k = \text{GO} \\ \dfrac{1}{8}w(1-y_k)^2 \text{ si } l_k = \text{BACK} \\ 8wy_k{}^2 \text{ autrement} \end{cases}$$

Et :

$$U_{\text{simplicity}}(X_k) = \frac{1}{4}\left(2 - 1_{l_k}(l_k - 1) - 1_{l_k}(l_k + 1)\right)$$

Où $y_k$ est proportionnel à la pente du segment $d_k$ et w est égal au nombre de positions déterminées du centre de gravité qui composent le segment $d_k$ divisé par le nombre total de segments,

> a. Modifier le label associé à au moins un segment de sorte à obtenir une nouvelle configuration et calculer la quantité U(X) correspondante :
>
> > 1. Si la quantité U(X) décroit, réitérer l'étape iii à partir de la nouvelle configuration,
> > 2. Sinon, réitérer l'étape iii à partir de la configuration précédente,
>
> b. Après un nombre déterminé d'itérations de l'étape iii :
>
> > 1. Identifier un ensemble connexe de segments labélisés «GO» comme déterminant une séquence d'images du flux représentative d'une marche dans un sens de l'individu et
> > 2. Identifier un ensemble connexe de segments labélisés «BACK» comme déterminant une séquence d'images du flux représentative d'une marche dans un sens opposé de l'individu.

Cette étape de segmentation selon le mode de réalisation préféré de l'invention permet donc de définir le mouvement capté en différentes séquences dont la durée n'est pas définie *a priori.* En effet, chaque séquence représente une action, ici un aller et un retour par rapport à la caméra, qui prend un temps nécessairement dépendant des conditions de l'individu et des conditions du lieu de prise de vue (sol en pente par exemple). Comme mentionné plus haut, d'autres types d'actions telles qu'un demi-tour, un «je me lève de ma chaise» ou autres peuvent également être identifiés, le cas échéant de façon empirique, par calibrage du modèle, en utilisant un modèle d'apprentissage, etc.

Une fois les séquences de la démarche de l'individu identifiées par segmentation sur l'intégralité de la prise de vue, il peut être nécessaire de reséquencer chaque séquence identifiée. C'est pourquoi le procédé d'analyse selon le mode de réalisation préféré de l'invention prévoit en outre une étape de reséquençage d'au moins une séquence identifiée, voire de chaque séquence identifiée. Cette étape vise à créer, à partir de chaque séquence identifiée, une sous-séquence en enlevant les extrémités de la séquence car ces dernières sont souvent bruitées.

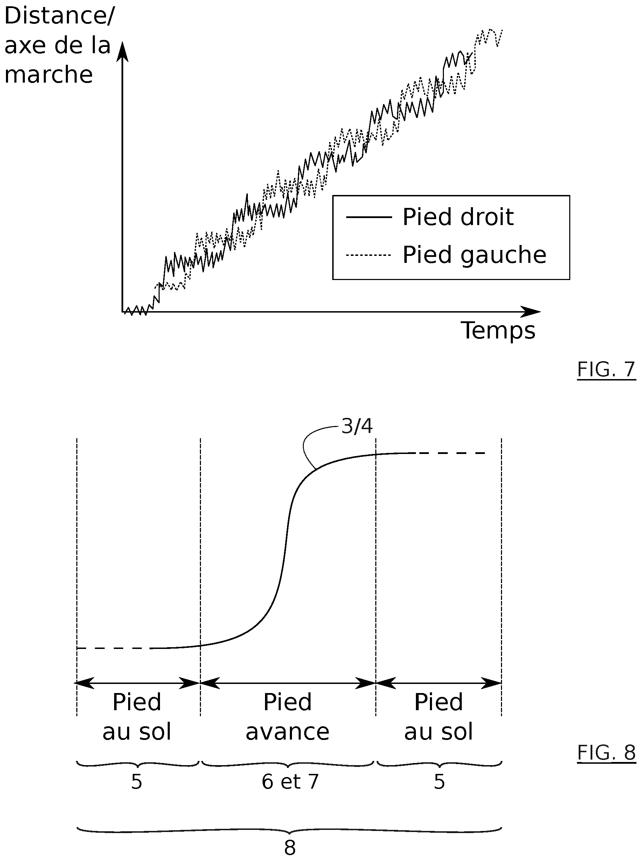

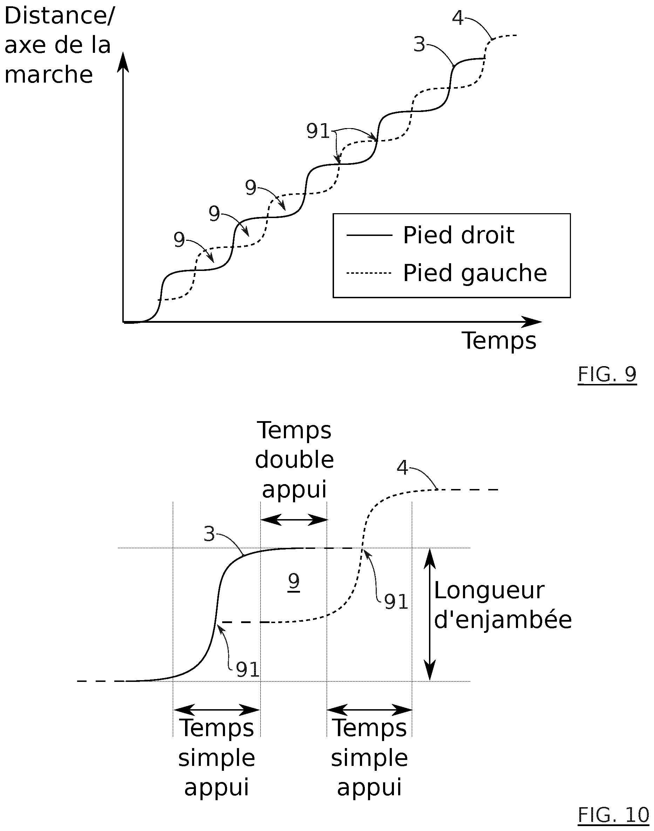

Comme mentionné précédemment, l'étape de lissage des images captées peut être réalisée et est de préférence effectivement réalisée au préalable ou en préambule à l'étape de reséquençage décrite ci-dessous. Elle vise dans le cadre du reséquençage de chaque séquence à obtenir une représentation graphique moins bruitée, voire débruitée, de la trajectoire de certaines parties ou articulations au moins de l'individu, et notamment des trajectoires des pieds droit et gauche de l'individu. Pour illustration, les trajectoires des pieds droit et gauche de l'individu peuvent être représentées sous la forme des courbes illustrées sur la figure 7 lorsqu'elles sont bruitées, et être représentées sous la forme des courbes illustrées sur la figure 9 lorsqu'elles sont débruitées.

L'étape de reséquençage est paramétrée de sorte à reséquencer chaque séquence pour en conserver une partie exploitable aux fins du calcul des paramètres de la démarche de l'individu.

Il est possible de commencer par appliquer un filtre médian sur la trajectoire de chaque pied pour enlever les données aberrantes dues aux occlusions. Cette étape concourt, le cas échéant en combinaison avec l'étape de lissage susmentionnée, au passage d'une représentation des trajectoires des pieds telle qu'illustrée sur la figure 7 à leur représentation telle qu'illustrée sur la figure 9.

Pour cela, on utilise une méthode de type croissance de régions basée sur, ou équivalemment initialisé avec, l'aire des intervalles entre les minima locaux de la courbe de différence entre les trajectoires des pieds gauche et droit. Les minima locaux de la différence entre les courbes représentant les trajectoires des pieds gauche et droit sont détectées pour estimer la position des croisements des pieds, voire en rajouter si l'individu ne croise pas les pieds avant de changer d'appui.

Ainsi, en référence à la figure 9, l'algorithme de croissance de régions est basé sur, ou équivalemment initialisé avec, l'aire des zones graphiques 9 délimitées chacune par les représentations graphiques 3, 4 bidimensionnelles des trajectoires des pieds et comprises chacune entre deux croisements 91 adjacents desdites représentations graphiques 3, 4.

Ensuite, l'implémentation de l'algorithme de croissance de régions comprend :

> i. la mesure de l'aire de chacune desdites zones 9,
> ii. la détermination, puis la sélection, de la zone de plus grande aire,
> iii. la sélection de toute zone :

b. connexe à une zone précédemment sélectionnée, et

c. d'aire supérieure à une valeur seuil prédéterminée exprimée par exemple en mm.ms, de préférence la valeur seuil étant égale à 4 mm.ms, la partie exploitable de chaque séquence d'images du flux étant définie comme la succession d'images du flux représentative de toutes les zones sélectionnées.

En sus, l'étape de sélection d'une zone peut comprendre en outre le critère selon lequel l'aire de la zone est supérieure au produit de la plus grande aire par un coefficient multiplicatif inférieur à 0,1, par exemple égal à 0,0015.

Selon le mode de réalisation préféré de l'invention, une fois le reséquençage effectué, il est possible, pour chaque séquence reséquencée, de déterminer, dans le même espace euclidien que celui dans lequel la trajectoire du centre de gravité a été préalablement déterminée durant l'étape de segmentation, la position du pied droit et la position du pied gauche de l'individu sur la base de chaque image tridimensionnelle.

Il doit être noté ici que si le procédé selon son mode de réalisation préféré comprend les étapes décrites ci-dessus de segmentation et de reséquençage, ces étapes ne sont toutefois pas incontournables, notamment lorsque l'opérateur sait que la prise de vue correspond à une seule action de l'individu, et donc à une seule séquence, et lorsque l'opérateur n'a lancé la prise de vue qu'à partir d'un moment où la démarche de l'individu était stable et a interrompu la prise de vue avant que la démarche de l'individu ne soit déstabilisée, par exemple avant une décélération de l'individu pour faire demi-tour. Autrement dit, les étapes de segmentation et de reséquençage ne sont pas nécessaires si le procédé d'analyse ne porte que sur une succession de flux d'images directement exploitable et relative à une unique action de l'individu. Autrement, elles permettent de réaliser une initialisation automatique et simple du procédé d'analyse selon l'invention. Le séquençage est souhaitable pour identifier la trajectoire générale de l'individu, effectuer la décomposition en séquences de cette trajectoire et permettre une automatisation de l'analyse. Si on ne travaille que sur un aller ou un retour de l'individu relativement à la caméra, elle n'est en revanche plus indispensable. Une solution pour reséquencer chaque séquence pourrait, en alternative à l'étape de reséquençage décrite ci-dessus, consister à réaliser une identification manuelle de la portion de vidéo sur laquelle on souhaite modéliser et analyser la démarche de l'individu. L'étape de reséquençage telle que décrite ci-dessus présente l'avantage d'être automatisée, et de ne pas nécessiter l'intervention d'un opérateur.

Dans le cas où les étapes de segmentation et de reséquençage ont été réalisées au préalable, certaines mesures et données ont été calculées lors de ces étapes qui peuvent être utilisées afin de déterminer la position du pied droit et la position du pied gauche de l'individu sur la base de chaque image tridimensionnelle. Dans le cas contraire, il peut être nécessaire d'implémenter au moins l'étape de lissage des images, puis, le cas échéant, une fois la trajectoire de chaque pied obtenue sur la base des images lissées ou non, l'étape d'application du filtre médian sur la trajectoire de chaque pied.

Le procédé d'analyse selon l'invention comprend en outre une étape de modélisation spatio-temporelle de la démarche de l'individu.

En référence à la figure 8, l'étape de modélisation spatio-temporelle de la démarche d'un individu consiste dans un premier temps à construire, sur la base des positions du pied droit et du pied gauche précédemment déterminées, une représentation graphique de la trajectoire du pied droit 3 et une représentation graphique de la trajectoire du pied gauche 4, respectivement. Plus particulièrement, chacune de ces représentations obéit à un modèle selon lequel chaque phase d'appui 5 d'un pied est représentée différemment et distinctement de deux autres phases 6 et 7 dont une phase d'accélération 6 succédant à chaque phase d'appui 5 et une phase de décélération 7 précédant chaque phase d'appui 5, comme illustré sur la figure 8. Cette figure représente plus particulièrement une enjambée 5, 6 et 7 comprenant la représentation d'une phase d'appui 5, la représentation d'une phase d'accélération 6 succédant immédiatement la phase d'appui 5 et la représentation d'une phase de décélération 7 succédant immédiatement la phase d'accélération 6, par exemple jusqu'à ce que le pied trouve de nouveau en appui au sol.

Plus particulièrement, chaque phase d'appui, dite aussi phase statique, de chaque pied est représentée par une portion de droite horizontale dont la longueur correspond à la durée de l'appui, et chaque paire de phases d'accélération et de décélération successives entre elles est représentée par une courbe de Bézier. Chaque courbe de Bézier peut être obtenue sur la base des positions du pied considéré pendant lesdites phases d'accélération et de décélération. En alternative ou en combinaison, chaque courbe de Bézier peut être obtenue sur la base de la position du pied en fin de phase d'appui et la position du pied en début de phase d'appui, les phases d'appui se succédant entre elles.

De la sorte, une succession de représentations d'une enjambée forme une représentation continue d'une partie de la démarche relative à un pied de l'individu.

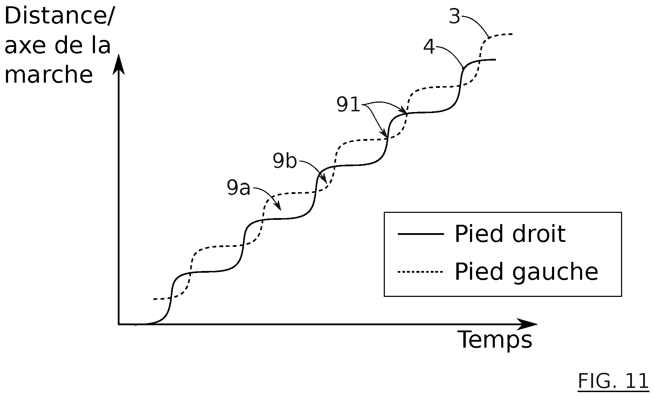

La représentation de la partie de la démarche relative au pied droit de l'individu et la représentation de la partie de la démarche relative au pied gauche de l'individu peuvent dès lors être mises en regard l'une par rapport à l'autre de la façon illustrée aussi bien sur la figure 9, que sur la figure 11. Il est dès lors possible de calculer certains paramètres qualifiant qualitativement et quantitativement la démarche de l'individu.

Plus particulièrement, en référence à la figure 10, il est notamment possible de mesurer les paramètres suivants :

i. la longueur d'au moins une, voire de chaque, enjambée calculée comme une différence d'ordonnées entre les représentations des phases d'appui successives d'un même pied,

ii. la longueur d'au moins un, voire de chaque, demi-pas calculée comme une différence d'ordonnées entre la représentation de la phase d'appui d'un pied et la représentation de la phase d'appui de l'autre pied, les représentations de phase d'appui se succédant directement entre elles,

iii. la cadence des enjambées calculée comme le nombre moyen de croisements entre les deux représentations par unité de temps,

iv. la vitesse de l'individu calculée par exemple comme une différence d'ordonnées entre deux croisements des représentations divisée par la différence d'abscisses entre ces deux croisements,

v. au moins un temps d'appui simple calculé comme une différence d'abscisses entre le début d'une représentation de la phase d'accélération 6 d'un pied et la fin d'une représentation de la phase de décélération 7 de ce pied, la représentation de la phase de décélération succédant directement à la représentation de la phase d'accélération, et

vi. au moins un temps d'appui double calculé comme une différence d'abscisses entre la fin d'une représentation de phase de décélération 7 d'un pied et le début d'une représentation de phase d'accélération 6 de l'autre pied, la représentation de la phase d'accélération succédant directement à la représentation de la phase de décélération.

En comparant, les figures 9 et 11 entre elles, il est possible d'identifier qualitativement, et au premier regard, que la démarche illustrée sur la figure 9 est symétrique, tandis que celle illustrée sur la figure 11 est asymétrique et certainement pathologique. En effet, sur la figure 11, les zones graphiques 9a et 9b délimitées successivement par les représentations graphiques 3, 4 des trajectoires des pieds et comprises chacune entre deux croisements 91 adjacents desdites représentations graphiques 3, 4 sont visiblement de superficie différentes entre elles. Cette représentation graphique de la démarche de l'individu révèle par exemple à un claudiquement ou un boitement de l'individu. Pour autant, la figure 9 peut également illustrer une démarche pathologique ; par exemple, si une analyse quantitative des représentations des trajectoires des pieds gauche et droit révèle que l'individu fait de trop petites enjambées relativement aux standards.

L'invention n'est pas limitée aux modes de réalisations précédemment décrits et s'étend à tous les modes de réalisation couverts par les revendications.

## Revendications

1. Procédé, mis en œuvre par ordinateur, d'analyse de la démarche d'un individu (1) comprenant au moins les étapes suivantes :

   a. l'acquisition, depuis un dispositif de capture d'images (2), d'un flux d'images de l'individu en mouvement de marche, le flux comprenant au moins une succession d'images et une succession correspondante de cartes de profondeur permettant de reconstruire des images tridimensionnelles (21), chaque carte de profondeur caractérisant la distance des objets vus par le dispositif (2),

   b. sur la base de chaque image tridimensionnelle (21), la détermination, dans un espace euclidien, de la position du pied droit et de la position du pied gauche de l'individu, puis

   c. la modélisation spatio-temporelle de la démarche de l'individu, l'étape de modélisation spatio-temporelle comprenant les étapes suivantes :

   i. pour chaque pied, la construction, sur la base des positions précédemment déterminées et ordonnées temporellement, d'une représentation graphique (3, 4) de la trajectoire du pied selon un modèle dans lequel chaque phase d'appui (5) du pied est représentée différemment et distinctement de deux autres phases dont une phase précédente de décélération (6) du pied et une phase subséquente d'accélération (7) du pied,

   ii. la mise en regard spatio-temporelle de la représentation (3) construite pour le pied gauche et de la représentation (4) construite pour le pied droit entre elles, par projection des représentations (3 et 4) dans ledit espace euclidien, puis

   iii. le calcul d'au moins un paramètre de la démarche de l'individu (1) sur la base des deux représentations (3 et 4) mises en regard,

   le procédé étant **caractérisé en ce que** chaque phase d'appui (5) est représentée par une portion de droite horizontale, dont la longueur correspond à la durée de l'appui et dans lequel chaque paire de phases d'accélération (6) et de décélération (7) successives entre elles est représentée par une courbe de Bézier, par exemple obtenue sur la base des positions du pied pendant lesdites phases d'accélération et de décélération.

2. Procédé selon la revendication précédente, dans lequel, pour chaque pied, la représentation d'une phase d'appui (5),

la représentation d'une phase d'accélération (6) succédant immédiatement la phase d'appui et la représentation d'une phase de décélération (7) succédant immédiatement la phase d'accélération forment ensemble une représentation, de préférence continue, d'une enjambée (8).

3. Procédé selon la revendication précédente, dans lequel, pour chaque pied, une succession de représentations d'enjambée (8) forme une représentation, de préférence continue, d'une partie de la démarche relative au pied considéré.

4. Procédé selon l'une quelconque des revendications précédentes, dans lequel ledit au moins un paramètre de la démarche de l'individu comprend au moins l'un parmi :

a. la longueur d'au moins une, voire de chaque, enjambée calculée comme une différence d'ordonnées entre les représentations des phases d'appui successives d'un même pied,
b. la longueur d'au moins un, voire de chaque, demi-pas calculée comme une différence d'ordonnées entre la représentation de la phase d'appui d'un pied et la représentation de la phase d'appui de l'autre pied, les représentations de phase d'appui se succédant directement entre elles,
c. la cadence des enjambées calculée comme le nombre moyen de croisements entre les deux représentations par unité de temps,
d. la vitesse de l'individu calculée par exemple comme une différence d'ordonnées entre deux croisements des représentations divisée par la différence d'abscisses entre ces deux croisements,
e. au moins un temps d'appui simple calculé comme une différence d'abscisses entre le début d'une représentation de la phase d'accélération (6) d'un pied et la fin d'une représentation de la phase de décélération (7) de ce pied, la représentation de la phase de décélération succédant directement à la représentation de la phase d'accélération, et
f. au moins un temps d'appui double calculé comme une différence d'abscisses entre la fin d'une représentation de phase de décélération (7) d'un pied et le début d'une représentation de phase d'accélération (6) de l'autre pied, la représentation de la phase d'accélération succédant directement à la représentation de la phase de décélération.

5. Procédé selon l'une quelconque des revendications précédentes, dans lequel l'étape de construction de chaque représentation graphique comprend, pour au moins une séquence d'images (10, 11) du flux, une étape de traitement par un filtre de lissage des images de la séquence pour obtenir au moins la représentation graphique de la trajectoire du pied (12).

6. Procédé selon l'une quelconque des revendications précédentes, comprenant en outre, pour au moins une séquence d'images (10, 11) du flux, une étape de reséquençage de la séquence de sorte à en conserver une partie exploitable aux fins du calcul dudit au moins un paramètre de la démarche de l'individu.

7. Procédé selon l'une quelconque des revendications 1 à 5 et selon la revendication précédente, dans lequel l'étape de reséquençage comprend l'implémentation d'un algorithme de croissance de régions initialisé avec l'aire des zones graphiques (9) délimitées chacune par les représentations graphiques, bidimensionnelles des trajectoires des pieds et comprises chacune entre deux croisements (91) adjacents desdites représentations graphiques.

8. Procédé selon la revendication précédente, dans lequel l'implémentation de l'algorithme de croissance de régions comprend :

a. la mesure de l'aire de chacune desdites zones (9),
b. la détermination, puis la sélection, de la zone de plus grande aire,
c. la sélection de toute zone :

i. connexe à une zone précédemment sélectionnée, et
ii. d'aire supérieure à une valeur seuil prédéterminée exprimée par exemple en mm.ms, de préférence la valeur seuil étant égale à 4 mm.ms,

la partie exploitable de ladite au moins une séquence d'images du flux étant définie comme la succession d'images du flux représentative de toutes les zones sélectionnées.

9. Procédé selon l'une quelconque des revendications précédentes, comprenant en outre, avant l'étape de modélisation spatio-temporelle, une étape de traitement de chaque carte de profondeur et/ou de chaque image, de préférence en couleurs, pour en extraire un ensemble de pixels (22) correspondant à la représentation de l'individu distingué parmi les objets vus par le dispositif.

**10.** Procédé selon la revendication précédente et de préférence selon la revendication 5, comprenant en outre une étape de segmentation de la succession d'images du flux sur la base des ensembles de pixels (22) extraits, l'étape de segmentation comprenant :

a. La détermination de la position du centre de gravité de chaque ensemble de pixels dans l'espace euclidien, puis
b. Sur la base des positions du centre de gravité précédemment déterminées, la détermination de la trajectoire du centre de gravité comme une succession de segments dk juxtaposés deux à deux, puis
c. Sur la base de la trajectoire du centre de gravité précédemment déterminée, la détermination d'au moins une séquence d'images (10, 11) du flux comme étant représentative d'une marche dans un sens ou dans un sens opposé de l'individu (1) relativement au dispositif de capture d'images (2).

**11.** Procédé selon la revendication précédente, dans lequel la détermination de la trajectoire du centre de gravité comprend l'utilisation de l'algorithme de Douglas Peucker avec une valeur seuil de distance minimale de division déterminée empiriquement pour déterminer les segments dk.

**12.** Procédé selon l'une quelconque des deux revendications précédentes, dans lequel la détermination de ladite au moins une séquence d'images (10, 11) du flux comprend :

a. l'association, à chaque segment dk, d'un label Ik choisi parmi un ensemble de labels représentant chacun une action associée à un modèle paramétrique décrivant l'action dans l'espace et dans le temps,
b. la mesure d'un niveau de pertinence de l'association précédemment réalisée en comparant, pour chaque segment dk au moins un segment voisin tel que prédit par le modèle paramétrique au segment voisin correspondant parmi ceux précédemment déterminés,
c. en cas d'un niveau de pertinence inférieure à une valeur seuil prédéterminée, modifier l'association précédente en appliquant un critère de modification pénalisant l'association de deux labels différents à deux segments successifs, puis
d. lorsque les niveaux de pertinence mesurés sont supérieurs à la valeur seuil prédéterminée, identifier un ensemble connexe de segments associés à un même label,
e. chaque séquence d'images (10, 11) du flux étant déterminée comme correspondant à un ensemble connexe identifié.

**13.** Produit programme d'ordinateur comprenant des instructions, qui lorsqu'elles sont effectuées par au moins un processeur, exécute au moins les étapes du procédé d'analyse selon l'une quelconque des revendications précédentes.

**Patentansprüche**

**1.** Computergestütztes Verfahren zur Analyse des Gangs einer Person (1), das mindestens die folgenden Schritte umfasst:

**a.** Erfassen eines Bildflusses der Person in Gangbewegung von einer Bilderfassungsvorrichtung (2), wobei der Fluss mindestens eine Bildabfolge und eine entsprechende Abfolge von Tiefenkarten umfasst, die es ermöglichen, dreidimensionale Bilder (21) zu rekonstruieren, wobei jede Tiefenkarte den Abstand der von der Vorrichtung (2) gesehenen Objekte charakterisiert,
b. anhand jedes dreidimensionalen Bildes (21) die Bestimmung der Position des rechten Fußes und der Position des linken Fußes der Person in einem euklidischen Raum und
c. die räumlich-zeitliche Modellierung des Gangs der Person, wobei der Schritt der räumlich-zeitlichen Modellierung die folgenden Schritte umfasst:

i. für jeden Fuß den Aufbau, anhand der zuvor bestimmten und zeitlich geordneten Positionen, einer grafischen Darstellung (3, 4) der Fußbahn nach einem Modell, in dem jede Auflagephase (5) des Fußes unterschiedlich und getrennt von zwei anderen Phasen dargestellt ist, darunter eine vorherige Verzögerungsphase (6) des Fußes und eine nachfolgende Beschleunigungsphase (7) des Fußes,

ii. die räumlich-zeitliche Gegenüberstellung der für den linken Fuß gebauten Darstellung (3) und der für den rechten Fuß gebauten Darstellung (4) untereinander, durch Projektion der Darstellungen (3 und 4) in den genannten euklidischen Raum, dann

iii. die Berechnung mindestens eines Parameters des Gangs der Person (1) anhand der beiden gegenüberliegenden Darstellungen (3 und 4),

wobei das Verfahren **dadurch gekennzeichnet ist, dass** jede Auflagephase (5) durch einen horizontalen geraden Abschnitt dargestellt wird, dessen Länge der Dauer des Aufliegens entspricht und wobei jedes Paar von aufeinanderfolgenden Beschleunigungsphasen (6) und Verzögerungsphasen (7) dazwischen durch eine Bezierkurve dargestellt wird, die beispielsweise anhand der Fußpositionen während der Beschleunigungs- und Verzögerungsphasen erhalten wird.

2. Verfahren nach dem vorhergehenden Anspruch, wobei für jeden Fuß die Darstellung einer Auflagephase (5), die Darstellung einer der Auflagephase unmittelbar folgenden Beschleunigungsphase (6) und die Darstellung einer der Beschleunigungsphase unmittelbar folgenden Verzögerungsphase (7) zusammen eine vorzugsweise kontinuierliche Darstellung eines Schritts (8) bilden.

3. Verfahren nach dem vorhergehenden Anspruch, wobei für jeden Fuß eine Abfolge von Schrittdarstellungen (8) eine vorzugsweise kontinuierliche Darstellung eines Teils des Gangs bezüglich des betreffenden Fußes bildet.

4. Verfahren nach einem der vorhergehenden Ansprüche, wobei der mindestens eine Parameter des Gangs der Person mindestens einen von folgenden umfasst:

   a. die Länge von mindestens einem oder sogar jedem Schritt, berechnet als eine Differenz der Ordinaten zwischen den Darstellungen der aufeinanderfolgenden Auflagephasen desselben Fußes,
   b. die Länge mindestens eines oder sogar jedes halben Schritts, berechnet als eine Differenz der Ordinaten zwischen der Darstellung der Auflagephase eines Fußes und der Darstellung der Auflagephase des anderen Fußes, wobei die Darstellungen der Auflagephasen direkt aufeinanderfolgen,
   c. die Schrittgeschwindigkeit, berechnet als die durchschnittliche Anzahl der Kreuzungen zwischen den beiden Darstellungen pro Zeiteinheit,
   d. die Geschwindigkeit der Person, die beispielsweise als eine Differenz der Ordinaten zwischen zwei Kreuzungen der Darstellungen geteilt durch die Abszissendifferenz zwischen diesen beiden Kreuzungen berechnet wird,
   e. mindestens eine einfache Auflagezeit, die als eine Abszissendifferenz zwischen dem Beginn einer Darstellung der Beschleunigungsphase (6) eines Fußes und dem Ende einer Darstellung der Verzögerungsphase (7) dieses Fußes berechnet wird, wobei die Darstellung der Verzögerungsphase direkt auf die Darstellung der Beschleunigungsphase folgt, und
   f. mindestens eine doppelte Auflagezeit, die als eine Abszissendifferenz zwischen dem Ende einer Darstellung der Verzögerungsphase (7) eines Fußes und dem Beginn einer Darstellung der Beschleunigungsphase (6) des anderen Fußes berechnet wird, wobei die Darstellung der Beschleunigungsphase direkt auf die Darstellung der Verzögerungsphase folgt.

5. Verfahren nach einem der vorhergehenden Ansprüche, wobei der Schritt des Erstellung jeder grafischen Darstellung für mindestens eine Bildsequenz (10, 11) des Flusses einen Schritt der Verarbeitung durch einen Filter zur Glättung der Bilder der Sequenz umfasst, um mindestens die grafische Darstellung der Fußbahn (12) zu erhalten.

6. Verfahren nach einem der vorhergehenden Ansprüche, ferner umfassend für mindestens eine Bildsequenz (10, 11) des Flusses einen Schritt der Resequenzierung der Sequenz, so dass ein für die Berechnung des mindestens einen Parameters des Gangs der Person nutzbarer Teil davon erhalten bleibt.

7. Verfahren nach einem der Ansprüche 1 bis 5 und nach dem vorhergehenden Anspruch, wobei der Schritt der Resequenzierung die Implementierung eines Wachstumsalgorithmus von Regionen umfasst, die mit der Fläche der grafischen Bereiche (9) initialisiert sind, die jeweils durch die zweidimensionalen grafischen Darstellungen der Fußbahnen begrenzt sind und jeweils zwischen zwei benachbarten Kreuzungen (91) der genannten grafischen Darstellungen liegen.

8. Verfahren nach dem vorhergehenden Anspruch, wobei die Implementierung des Wachstumsalgorithmus von Regionen Folgendes umfasst:

a. die Messung der Fläche jedes der genannten Bereiche (9),
b. die Bestimmung und anschließende Auswahl des Bereiches mit der größten Fläche,
c. Auswahl eines beliebigen Bereichs:

    i. zusammenhängend mit einem zuvor ausgewählten Bereich und
    ii. einer Fläche größer als ein vorbestimmter Schwellenwert, zum Beispiel ausgedrückt in mm.ms, wobei der Schwellenwert vorzugsweise 4 mm.ms beträgt,

wobei der nutzbare Teil der mindestens einen Bildsequenz des Flusses als die Bildabfolge des Flusses definiert ist, die repräsentativ für alle ausgewählten Bereiche ist.

9. Verfahren nach einem der vorhergehenden Ansprüche, ferner umfassend, vor dem Schritt der räumlich-zeitlichen Modellierung, einen Schritt der Verarbeitung jeder Tiefenkarte und/oder jedes Bildes, vorzugsweise in Farbe, um daraus eine Pixelgruppe (22) zu extrahieren, die der Darstellung der Person entspricht, die unter den von der Vorrichtung gesehenen Objekten unterschieden wird.

10. Verfahren nach dem vorhergehenden Anspruch und vorzugsweise nach Anspruch 5, ferner umfassend einen Schritt zur Segmentierung der Bildabfolge des Flusses anhand der extrahierten Pixelsätze (22), wobei der Schritt der Segmentierung Folgendes umfasst:

a. Bestimmung der Position des Schwerpunkts jedes Pixelsatzes im euklidischen Raum, dann
b. Anhand der zuvor ermittelten Positionen des Schwerpunktes, Bestimmung der Schwerpunktbahn als eine Abfolge von zwei zu zwei nebeneinander liegenden dk-Segmenten, dann
c. Anhand der zuvor ermittelten Positionen des Schwerpunktes, Bestimmung von mindestens einer Bildsequenz (10, 11) des Flusses als repräsentativ für einen Gang in eine oder entgegengesetzte Richtung der Person (1) in Bezug auf die Bilderfassungsvorrichtung (2).

11. Verfahren nach dem vorhergehenden Anspruch, wobei die Bestimmung der Schwerpunktbahn die Verwendung des Douglas-Peucker-Algorithmus mit einem empirisch bestimmten Mindestabstandsschwellenwert für die Teilung zur Bestimmung der dk-Segmente umfasst.

12. Verfahren nach einem der beiden vorhergehenden Ansprüche, wobei das Bestimmen der mindestens einen Bildsequenz (10, 11) des Flusses Folgendes umfasst:

a. Zuordnung, zu jedem dk-Segment, eines lk-Kennzeichens, das aus einer Reihe von Kennzeichen ausgewählt wird, die jeweils eine Aktion repräsentieren, die mit einem parametrischen Modell verbunden ist, das die Aktion in Raum und Zeit beschreibt,
b. Messung eines Relevanzniveaus der zuvor durchgeführten Assoziation, indem für jedes dk-Segment mindestens ein benachbartes Segment, wie es durch das parametrische Modell vorhergesagt wird, mit dem entsprechenden benachbarten Segment unter den zuvor bestimmten Segmenten verglichen wird,
c. im Falle eines Relevanzniveaus, das unter einem vorbestimmten Schwellenwert liegt, Modifizieren der vorherigen Assoziation durch Anwenden eines Änderungskriteriums, das die Assoziation von zwei verschiedenen Kennzeichen mit zwei aufeinanderfolgenden Segmenten ahndet, dann
d. wenn die gemessenen Relevanzniveaus über dem vorbestimmten Schwellenwert liegen, Identifizieren eines zusammenhängenden Satzes von Segmenten, die mit demselben Kennzeichen verbunden sind,
e. wobei jede Bildsequenz (10, 11) des Flusses als einer identifizierten zusammenhängenden Einheit entsprechend bestimmt wird.

13. Computerprogrammprodukt, das Anweisungen umfasst, die, wenn sie von mindestens einem Prozessor ausgeführt werden, mindestens die Schritte des Analyseverfahrens nach einem der vorhergehenden Ansprüche ausführen.

**Claims**

1. Method, implemented by computer, for analysing the gait of an individual (1) comprising at least the following steps of:

a. acquiring, from an image capturing device (2), a stream of images of the individual in walking motion, the stream comprising at least one sequence of images and a corresponding sequence of depth maps making it possible to reconstruct three-dimensional images (21), each depth map characterising the distance of objects seen by the device (2),

b. on the basis of each three-dimensional image (21), determining, in a Euclidean space, the position of the right foot and the position of the left foot of the individual, then

c. performing spatio-temporal modelling of the gait of the individual, the spatio-temporal modelling step comprising the following steps of:

i. for each foot, constructing, on the basis of the previously determined and time-ordered positions, a graphical representation (3, 4) of the path of the foot according to a model wherein each phase (5) of placing weight on the foot is represented differently and separately from two other phases of which a preceding phase of deceleration (6) of the foot and a subsequent phase of acceleration (7) of the foot,

ii. placing the representation (3) constructed for the left foot and the representation (4) constructed for the right foot in spatio-temporal alignment with one another, by projecting the representations (3 and 4) in said Euclidean space, then

iii. computing at least one parameter of the gait of the individual (1) on the basis of the two aligned representations (3 and 4),

the method being **characterised in that** each weight placing phase (5) is represented by a horizontal straight portion, the length of which corresponds to the duration of the placing of weight and wherein each pair of successive phases of acceleration (6) and of deceleration (7) with one another is represented by a Bezier curve, for example obtained on the basis of the positions of the foot during said acceleration and deceleration phases.

2. Method according to the preceding claim, wherein, for each foot, the representation of a weight placing phase (5), the representation of an acceleration phase (6) immediately following the weight placing phase and the representation of a deceleration phase (7) immediately following the acceleration phase together form a representation, preferably continuous, of a stride (8).

3. Method according to the preceding claim, wherein, for each foot, a sequence of representations of stride (8) forms a representation, preferably continuous, of a part of the gait relating to the foot considered.

4. Method according to any one of the preceding claims, wherein said at least one parameter of the gait of the individual comprises at least one of:

a. the length of at least one, or even of each, stride computed as a difference in ordinates between the representations of the successive phases of placing weight on the same foot,

b. the length of at least one, or even of each, half-step computed as a difference in ordinates between the representation of the phase of placing weight on one foot and the representation of the phase of placing weight on the other foot, the weight placing representations directly following one after another,

c. the rate of the strides computed as the average number of intersections between the two representations per unit of time,

d. the speed of the individual computed for example as a difference in ordinates between two intersections of the representations divided by the difference in abscissa between these two intersections,

e. at least one single weight placing time computed as a difference in abscissa between the beginning of a representation of the phase (6) of acceleration of a foot and the end of a representation of the phase (7) of deceleration of this foot, the representation of the deceleration phase directly following the representation of the acceleration phase, and

f. at least one double weight placing time computed as a difference in abscissa between the end of a representation of phase (7) of deceleration of one foot and the beginning of a representation of phase (6) of acceleration of the other foot, the representation of the acceleration phase directly following the representation of the deceleration phase.

5. Method according to any one of the preceding claims, wherein the step of constructing each graphical representation comprises, for at least one sequence of images (10, 11) of the stream, a step of processing by a filter for smoothing the images of the sequence to obtain at least the graphical representation of the path of the foot (12).

6. Method according to any one of the preceding claims, further comprising, for at least one sequence of images (10, 11) of the stream, a step of resequencing the sequence so as to retain a usable part thereof for the purposes of computing said at least one parameter of the gait of the individual.

7. Method according to any one of claims 1 to 5 and according to the preceding claim, wherein the resequencing step comprises implementing a regional growth algorithm initialised with the area of the graphical zones (9) each delimited by the graphical, two-dimensional representations of the paths of the feet and each comprised between two adjacent intersections (91) of said graphical representations.

8. Method according to the preceding claim, wherein implementing the region growth algorithm comprises:

   a. measuring the area of each of said zones (9),
   b. determining, then selecting, the zone with the largest area,
   c. selecting any zone:

      i. related to a previously selected zone, and
      ii. with an area greater than a predetermined threshold value expressed for example in mm.ms, preferably the threshold value being equal to 4 mm.ms,

   the usable part of said at least one sequence of images of the stream being defined as the sequence of images of the stream representative of all of the selected zones.

9. Method according to any one of the preceding claims, further comprising, prior to the spatio-temporal modelling step, a step of processing each depth map and/or each image, preferably in colour, to extract therefrom a set of pixels (22) corresponding to the representation of the individual distinguished from the objects seen by the device.

10. Method according to the preceding claim and preferably according to claim 5, further comprising a step of segmentation of the sequence of images of the stream on the basis of the extracted sets of pixels (22), the segmentation step comprising:

    a. Determining the position of the centre of gravity of each set of pixels in the Euclidean space, then
    b. On the basis of the previously determined positions of the centre of gravity, determining the path of the centre of gravity as a sequence of two-by-two adjacent segments $d_k$, then
    c. On the basis of the previously determined path of the centre of gravity, determining at least one sequence of images (10, 11) of the stream as being representative of a step in one direction or in an opposite direction of the individual (1) relative to the image capturing device (2).

11. Method according to the preceding claim, wherein determining the path of the centre of gravity comprises using the Douglas Peucker algorithm with an empirically determined minimum division distance threshold value to determine the segments $d_k$.

12. Method according to any one of the two preceding claims, wherein determining said at least one sequence of images (10, 11) of the stream comprises:

    a. associating, with each segment $d_k$, a label $l_k$ selected from a set of labels each representing an action associated with a parametric model describing the action in space and time,
    b. measuring a relevance level of the association previously performed by comparing, for each segment $d_k$, at least one neighbouring segment as predicted by the parametric model with the corresponding neighbouring segment from those previously determined,
    c. in the event of a relevance level lower than a predetermined threshold value, modifying the previous association by applying a modification criterion penalising the association of two different labels with two successive segments, then
    d. when the measured relevance levels are higher than the predetermined threshold value, identifying a related set of segments associated with the same label,
    e. each sequence of images (10, 11) of the stream being determined as corresponding to an identified related set.

13. Computer program product comprising instructions, which when carried out by at least one processor, executes at least the steps of the analysis method according to any one of the preceding claims.

FIG. 1

FIG. 2

Séquence vue frontale

Séquence vue dorsale

FIG. 3

FIG. 4

Séquence 1 :
aller

Séquence 2 :
retour

- • Centre de gravité bruité à un instant donné
- — Trajectoire simplifiée calculée avec Douglas Peucker
- ⋯ Décomposition en séquences

FIG. 5

Si d>150
alors division
(split)

FIG. 6

Distance/
axe de la
marche

Pied droit

.......... Pied gauche

Temps

FIG. 7

3/4

Pied
au sol

Pied
avance

Pied
au sol

5

6 et 7

5

8

FIG. 8

Distance/
axe de la
marche

| Pied droit |
| Pied gauche |

Temps

FIG. 9

Temps
double
appui

Longueur
d'enjambée

Temps
simple
appui

Temps
simple
appui

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170243354 A1

- US 2015325004 A1

**Littérature non-brevet citée dans la description**

- **AYANORI YOROZU**. Improved Leg Tracking Considering Gait Phase and Spline-Based Interpolation during Turning Motion in Walk Tests. *SENSORS*, 04 September 2015, vol. 15 (9), 22451-22472